**Europäisches Patentamt**

(19) **European Patent Office**

**Office européen des brevets**

(11) Publication number: **0 120 571**
**A1**

(12) # EUROPEAN PATENT APPLICATION

(21) Application number: **84300781.6**

(22) Date of filing: **08.02.84**

(51) Int. Cl.³: **B 62 M 25/08**

(30) Priority: **14.02.83 US 466012**

(43) Date of publication of application:
**03.10.84 Bulletin 84/40**

(84) Designated Contracting States:
**AT BE CH DE FR GB IT LI LU NL SE**

(71) Applicant: **TELEWE', INC.**
**378 Mill Road, S.W.**
**Lancaster Ohio 43130(US)**

(72) Inventor: **Cotter, James F.**
**105 Crown Court**
**Lancaster Ohio 43130(US)**

(72) Inventor: **Trethewey, William C.**
**176 Skyline Drive**
**Lancaster Ohio 43130(US)**

(72) Inventor: **Clem, William E.**
**378 Mill Road, S.W.**
**Lancaster Ohio 43130(US)**

(74) Representative: **Gilmour, David Cedric Franklyn et al,**
**POTTS, KERR & CO. 15 Hamilton Square**
**Birkenhead Merseyside L41 6BR(GB)**

(54) Improved pneumatic shifter for multi-speed bicycles.

(57) Improvements are disclosed for a multi-speed bicycle pneumatic transmission shifter of the type having a pump (80) pumping air at a rate which is a function of vehicle speed, a pressure responsive motor (96) connected pneumatically to the pump and mechanically to the bicycle derailleur (94) and a controlled vent (90) interposed pneumatically for permitting the controlled escape of air. Manually actuated rapid down-shifting is permitted by providing a valve (88) which, when actuated, vents pressure to the atmosphere. Rapid upshifting is permitted by a normally open valve (92) connected to the outlet of the controlled vent (90) for blocking the venting of air to cause the upshift. The time for automatic downshift is decreased by providing a differential exhaust valve (98) connected pneumatically to the motor (96) for venting the air to atmosphere in response to a selected differential across the exhaust differential valve. Locking the transmission in a selected position may be accomplished by a valve (100) which, when closed blocks the movement of air away from the motor (96). An air tank reservoir (108) and control valves (112-120) for it may be utilized to permit alternative rider selection of manual control of the transmission and unloading of the pump.

./...

Fig 6

-1-

IMPROVED PNEUMATIC SHIFTER FOR MULTI-SPEED BICYCLES .

Field Of The Invention

This invention relates to automatic transmission shifters for human powered vehicles such as multi-speed bicycles and more particularly relates to improved means for rapid, automatic downshift of the transmission during rapid deceleration and also improved means for permitting manually actuated rapid downshift, rapid upshift, locking in a selected gear and front derailleur control.

Background Art

People powered vehicles such as multi-speed bicycles are often equipped with variable speed transmissions. Such bicycles most commonly have three speeds, ten speeds and twelve speeds, although other combinations are known. The transmissions of these vehicles are shifted in order to permit changes in wheel torque and gear ratios so that the operator of the vehicle may pedal at a pedal speed and torque which are most comfortable for that operator under the conditions he is currently encountering.

Although some people enjoy manually shifting such variable speed transmissions, others don't or they do not understand their theory of operation and merely want to enjoy the pleasure of riding the vehicle and the exercise without being bothered with gear shifting decisions and manipulations. These people sometimes find that they shift improperly sometimes causing damage to the vehicle and a rough, uncomfortable ride.

Automatic transmission shifters have been suggested by others and are generally mechanically, hydraulically or pneumatically operated devices. Known or previously suggested transmission shifters typically have a speed sensing device such as a pump mechanically linked to a vehicle wheel and a controlled vent for permitting the controlled escape of air so that pump pressure is directly proportional to vehicle speed. This is connected to a pressure responsive motor which in turn is mechanically connected to the vehicle transmission shifter input. Such a system is shown in the patent of James F. Cotter, No. 4,352,503 entitled Automatic Transmission Shifter For Bicycles.

Pneumatic systems are preferred because of their light weight and simplicity, because they require no return lines, no fluid supply tanks and because no fluid supply need be carried around. Additionally, a pneumatic system draws its fluid from an inexhaustible, ambient source which cools the parts and does not require replenishment. Slight leakage causes no problem because of the inexhaustible supply of air and such leakage causes no environmental contamination.

One problem with known fluid operated transmission shifters of the type described is that upon relatively rapid deceleration, such as during braking, the air cannot escape rapidly enough through the controlled vent to maintain a proportional relationship between vehicle speed and system pressure. Although the system eventually reaches equilibrium after a sufficient time interval, the vehicle rider may wish to have the vehicle automatically downshift more rapidly.

Similarly, a rider upon approaching an upward incline may desire to manually downshift the transmission while maintaining approximately the same vehicle speed so that more torque may be applied to the drive wheel to overcome gravitational forces. Additionally, a rider may at times wish to rapidly, manually upshift the vehicle, for example during a downward incline.

There is therefore a need for improvements in pneumatic shifters which provide for the automatic downshift of the transmission during rapid deceleration and which also permits the rider to override the automatic control system and manually induce a rapid downshift or rapid upshift of the transmission.

Under some conditions a rider may wish to lock the transmission in a selected position so that the gear ratio remains unchanged despite changes in vehicle speed. Some riders wish to also control a second transmission, such as the front pedal derailleur of a bicycle, in order to provide additional gear ratios. It is additionally desirable to provide the optional capability to revert to entirely manual control when desired but to do so using pneumatic control valves. There is therefore a need for an apparatus permitting such control and at the same time disengaging the automatic transmission shifter to eliminate the small load it places on the rider.

## Summary Of The Invention

This invention is directed to improvements in pneumatic transmission shifters of the type having a pump linked to the vehicle for pumping air at a rate which is a function of vehicle speed. A pressure responsive motor is pneumatically connected to the pump and mechanically connected to the vehicle transmission shifter imput for shifting the transmission in proportion to the pressure applied to the motor. A controlled vent is interposed between the pump and the motor for permitting the controlled escape of air so that pressure in the system is normally proportional to vehicle speed.

Such an automatic transmission shifter is improved with a manually actuable, normally closed valve connected in communication between the pump and the motor. This valve can be manually actuated to relieve the pressure applied to the motor and thereby cause rapid transmission downshifting corresponding to the reduced pressure.

A further improvement is the addition of a manually actuable, normally opened valve connected to the outlet end of the controlled vent. Although normally open and of no consequence, upon actuation it blocks the passage of air out of the controlled vent to cause rapid transmission upshifting corresponding to the pressure increase resulting from blocking further escape of air from the system.

The pneumatic transmission shifter is further improved by the addition of a differential exhaust valve connected between the pump and the motor. The exhaust valve vents to atmosphere to relieve pressure applied to the motor whenever the pump pressure at the input to the exhaust valve falls sufficiently below the motor pressure at the output of the differential exhaust valve. This permits the automatic venting of air and down shifting when the pumping rate and therefore the pump pressure suddenly is substantially reduced, such as during braking to a stop.

The transmission may be locked in a selected position by means of a valve which is interposed between the pressure responsive motor and the source of actuating air applied to it. When this valve is closed, further changes in pressure of the system may not be applied to the motor thereby locking the transmission in the selected position.

Entire manual operation may be permitting by the provision of a pressure reservoir connected to supply actuating gas under pressure into the pneumatic system.

Preferably, a reservoir control valve is provided so that air will not escape into the system during automatic operation but manual introduction of air under pressure into the system is permitted when desired. A pump relief/dump valve means is advantageously also utilized so that when the pressure reservoir is used, the pump may be bypassed so that it offers no resistance to the pedalling effort of the rider.

Brief Description Of The Drawings

Fig. 1 is a view in perspective of a multi-speed bicycles embodying the invention.

Fig. 2 is a view in side elevation of the left rear portion of the embodiment illustrated in Fig. 1.

Fig. 3 is a view in side elevation of the right rear portion of the embodiment illustrated in Fig. 1.

Fig. 4 is a view in perspective of the front, handle bar portion of the embodiment illustrated in Fig. 1.

Fig. 5 is a schematic diagram of a simplified embodiment of the invention.

Fig. 6 is a schematic diagram of an embodiment of the invention illustrating the combination of all aspects of the present invention.

In describing the preferred embodiment of the invention illustrated in the drawings, specific terminology will be resorted to for the sake of clarity. However, it is not intended to be limited to the specific terms so selected and it is to be understood that each specific term includes all technical equivalents which operate in a similar manner to accomplish a similar purpose. For example, the word "connected" or the like is not limited to direct connected where indirect connection through other devices is recognized as equivalent in the art.

Detailed Description

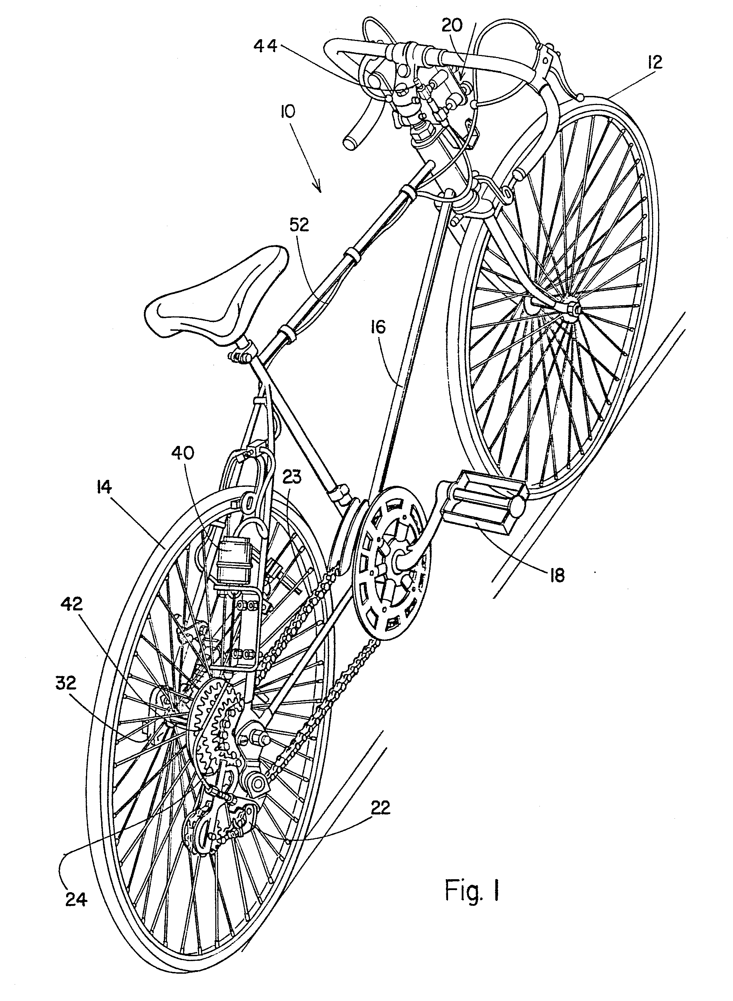

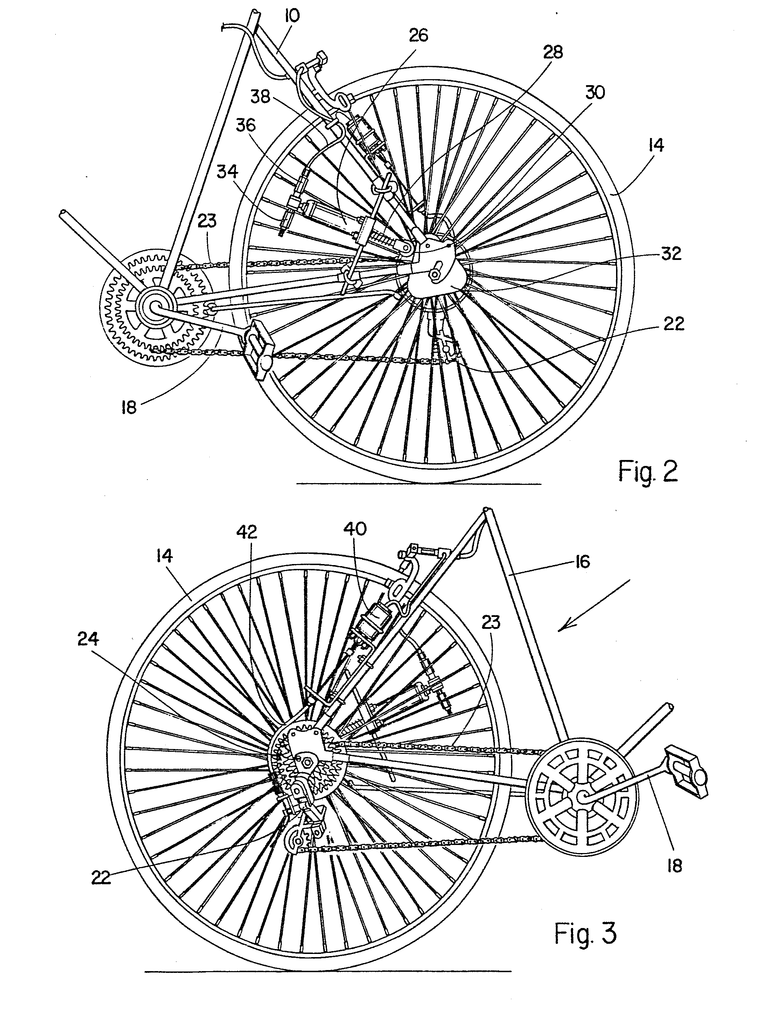

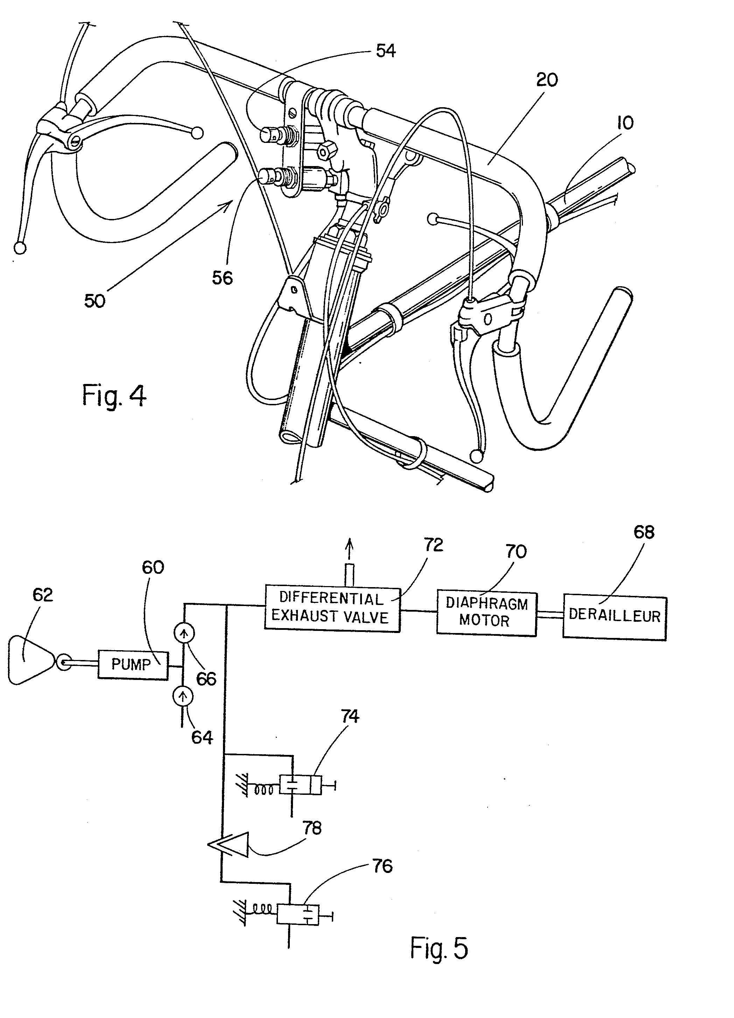

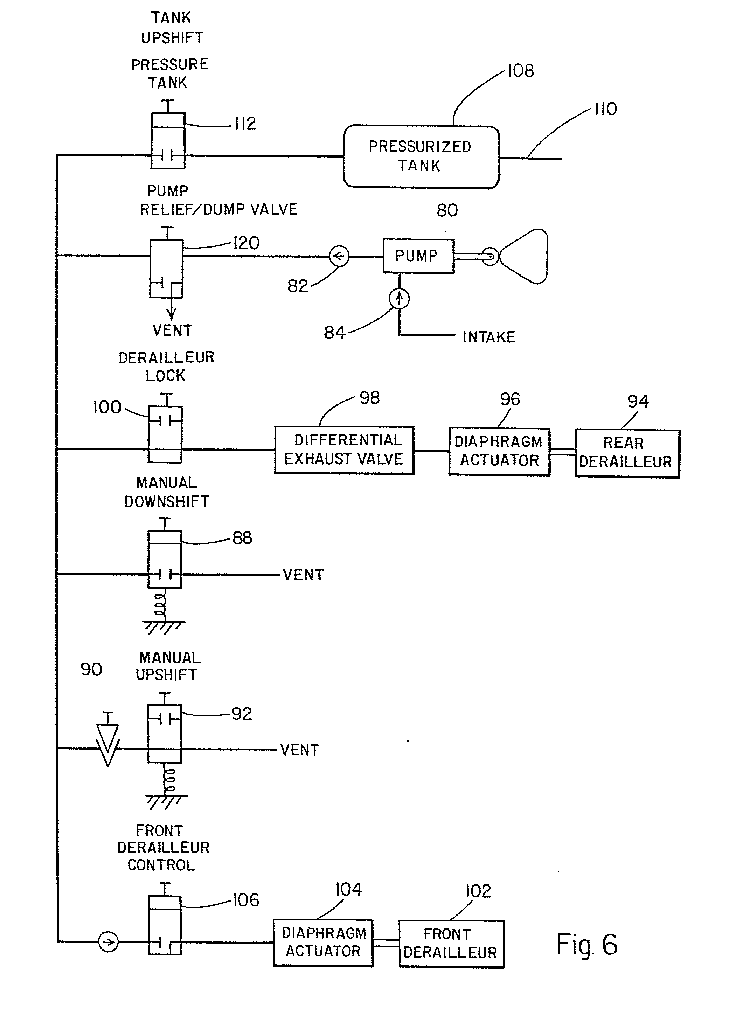

Figs. 1-4 illustrate the physical structure and assembly of an embodiment of the invention while Figs. 5 and 6 schematically illustrate embodiments of the invention.

Referring to Figs. 1-4, a multi-speed bicycle 10 is illustrated having a conventional front wheel 12, rear wheel 14, frame 16, pedals 18 and handlebars 20. A conventional derailleur 22 is mounted near the rear axle and serves to realign the chain 23 onto different ones of the rear wheel sprockets 24.

The illustrated bicycle is equipped with a pneumatic transmission shifter of the type described in U.S. Patent 4,352,503 to Cotter. It has a pump 26 mounted to the bicycle frame 16 near the rear wheel. The pump includes a piston sealingly reciprocating within a cylinder and mounted to a piston rod 28 having a cam follower 30 at its distal end. The cam follower 30 seats against the outer rim of a harmonic, three lobe cam 32 fixed for rotation with the wheel and centered about the rear wheel axle. The pump 26 is provided with suitable check valves 34 and 36 so that air is pumped from the ambient atmosphere into the supply line 38 at a rate which is proportional to the angular velocity of the rear wheel 14.

A pressure responsive, pneumatic motor is mechanically linked through an actuating cable 42 to the derailleur 22. Suitable Biasing springs are provided so that the derailleur is biased to its most downshifted position providing the highest gear ratio such as is used under the slowest speed and highest torque conditions.

The pneumatic motor 40 is preferably a diaphragm actuator of the type conventionally used by automotive manufacturers and is linked to the pin conventionally found on derailleurs. Alternatively, of course, a piston type motor could also be used.

A controlled vent 44, such as a manually adjustable needle valve, is interposed in the pneumatic circuit between the pump 26 and the motor 40 for permitting the controlled escape of air during operation. Pressure in the pneumatic system between the pump 26 and the motor 40 is directly proportional to the angular velocity of the wheel and is also proportional to the size of the orifice of the controlled vent 44. Therefore, adjustment of the vent 44 permits adjustment and control of the vehicle speed at which upshift to the next higher gear occurs. However, upon a sufficiently rapid deceleration, a time lag may occur in downshifting while enough air escapes through the vent orifice to reduce the pressure to that equilibrium which is appropriate for the reduced speed.

In order to overcome this and other problems, a plurality of valves 50 are mounted to the handle bars 20 of the bicycle and connected to the remainder of the system through tubing 52.

As seen most clearly in Fig. 4, two manually controlled valves are illustrated for overriding the automatic operation of the system. The upper valve actuator 54 is connected to the output of the needle valve controlled vent 44 to block the flow from the vent 44 and thereby cause pressure in the system to increase. This pushes the pneumatic motor to result in a rapid upshift in the transmission. Similarly, the lower actuator 56 is depressed to override the system and bleed air from it thereby causing a rapid loss of pressure and a resulting downshift of the transmission.

Fig. 5 is a schematic diagram illustrating the embodiment of the invention shown in Figs. 1-4. The pump 60 is shown linked to the three lobe cam 62 and is provided with a pair of check valves. Check valve 64 permits the air to be drawn into the pump and check valve 66 permits air to be forced into the pneumatic circuit. The derailleur 68 is mechanically linked to the pneumatic motor 70 which in turn is pneumatically connected through a differential exhaust valve 72 to the manual override valves 74 and 76 and to the needle valve vent 78.

The differential exhaust valve 72, which is connected between the pump and the motor, is a conventional valve which provides a path communicating between its inlet and its outlet unless it detects a pressure differential in which its input pressure is less than its output pressure by a selected pressure differential. Preferably, it is advantageous to use a differential exhaust valve 72 which responds to a pressure differential of 10 lbs. per square inch. When the selected pressure differential is detected, the differential exhaust valve vents the pneumatic motor 70 to the atmosphere.

Therefore, the operation of the embodiment illustrated in Fig. 5 may be considered at a starting point with the bicycle at rest. Under this condition and with the valves 74 and 76 in their normal spring biased positions as illustrated, no pressure would exist in the pneumatic system. Acceleration of the vehicle will cause a proportional increase of pressure in the pneumatic system with air being continuously bled at a metered rate through the needle valve 78 and out through the normally open valve 76. As vehicle speed increases, more pressure is applied to the diaphragm motor 70 and the vehicle derailleur 68 is shifted in the manner described above.

If, while riding the bicycle, the rider determines that he wishes to rapidly upshift to a higher gear, he may do so by depressing valve 76. This blocks the flow of air out of the system through the needle valve 78 and causes a rapid increase in pressure. The pressure increase will thus rapidly shift the diaphragm motor to the extreme upshifted end of the derailleur 68.

Similarly, if the rider determines that he wishes to rapidly downshift the derailleur 68, he merely depresses the valve 74 causing the pneumatic system to be rapidly vented to the atmosphere. This causes a rapid decrease in pressure, causing the diaphragm motor to be forced by the spring bias to the downshifted end of the derailleur range.

If the rider decelerates rapidly, for example to a complete stop, the pressurized air contained in the system would all need to bleed out through the needle valve vent 78 except for the presence of the differential exhaust valve 72. We have found that with the needle valve set for pleasant and desirable upshifting, a significant amount of time is required for the pressure of the system to be sufficiently reduced that the diaphragm motor returns to the most downshifted position. The differential exhaust valve 72, however, overcomes this problem by detecting the relatively rapid decrease of pressure on the needle valve side of the differential exhaust valve 72 in the portion of the circuit which is of relatively low volume as compared to the volume of the diaphragm motor 70. Upon sensing this pressure differential, the differential exhaust valve 72 immediately opens and vents the system pressure to the atmosphere so that the diaphragm motor will be immediately exhausted and can then return to its most downshifted position.

Fig. 6 illustrates an embodiment of the invention which is further improved over that which is illustrated in Fig. 5. It includes a front derailleur control system, a pressurized tank and a derailleur locking system none of which are illustrated in Figs. 1-5. However, the valves illustrated in Fig. 6 and other hardware are conventionally obtainable, the front derailleur is a conventionally provided device and its connection to the diaphragm actuator is analogous to that illustrated in connection with the rear derailleur.

Fig. 6 illustrates the pump 80, check valves 82 and 84 and three cam lobe 86 like that illustrated in Figs. 1-5. The pneumatic circuit of Fig. 6 is provided with a manual downshift valve 88 for venting system pressure to atmosphere in order to cause the rapid downshift of the transmission. The circuit of Fig. 6 also is provided with a needle valve vent 90 and a manual upshift valve 92 which may be depressed to prevent further escape of air from the system and thereby cause a rapid upshift of the transmission. The circuit of Fig. 6 is further provided with a rear derailleur 94, a pneumatic motor such as a diaphragm actuator 96 and a differential exhaust valve 98 all connected and operating like corresponding parts illustrated in Figs. 1-5.

The pneumatic circuit of Fig. 6 is, however, additionally provided with a derailleur lock valve 100. The derailleur lock valve 100, when opened, permits the passage of pneumatic fluid through it so that the differential exhaust valve, diaphragm actuator and rear derailleur will operate in the manner described in connection with Figs. 1-5. However, the rider may switch the derailleur lock valve 100 to its off position thereby preventing the pressure upon the diaphragm actuator from changing. Thus, when the vehicle transmission is in a position providing a gear ratio which is desired by the rider, the rider may switch the derailleur lock valve 100 to its off position thereby locking the diaphragm actuator and through it the rear derailleur in the selected position.

The pneumatic circuit of Fig. 6 also illustrates a front derailleur 102 which is mechanically linked to a diaphragm actuator 104 in a manner like the connection of the diaphragm actuator 96 to the rear derailleur 94. However, since pedals conventionally have only two sprockets and therefore their derailleurs only have two positions, the desired sprocket is simply selected by the rider selectively positioning a front derailleur control valve 106 in one of its two positions. If the front derailleur control valve is positioned as illustrated in Fig. 6, the diaphragm actuator is vented to atmosphere and passage of pneumatic fluid into the front derailleur control valve 106 is blocked. In this position the front derailleur 102 is forced to one of its two positions by its spring bias.

However, when the front derailleur control valve 106 is switched to its other position, it permits pneumatic pressure to be applied to the diaphragm actuator 104 to switch the front derailleur to its second position. The front diaphragm actuator 104 is selected so that it can apply sufficient force upon the front derailleur to accomplish this shifting even at the relatively low pressures which result from relatively low vehicle speed.

The pneumatic circuit of Fig. 6 additionally shows the structure for permitting the derailleur to be manually controlled without the need for the pump 80. This is accomplished by means of a pressurized tank or reservoir 108 which is provided with a coupling means 110, such as that found on a bicycle tire, for charging the reservoir tank 108 with a gas, such as air, under pressure. The reservoir 108 is connected through a tank upshift pressure supply valve 112 to the pneumatic system.

When the tank upshift pressure supply valve 112 is in its closed position, as illustrated in Fig. 6, the pressurized reservoir 108 is not connected in the pneumatic circuit and has no function. However, when the tank upshift pressure supply valve 112 is switched to its open position tank pressure is applied to the system. The tank pressure will be sufficiently high that it can cause upshift to whatever gear ratio is selected. Upon shifting to the desired transmission position or gear ratio, the derailleur lock valve 100 is actuated to hold the rear derailleur in the desired position. The front derailleur may also be controlled as described above.

After the rear derailleur is locked in its desired position, the tank upshift pressure supply valve 112 may be closed to avoid unnecessary loss of pneumatic fluid from the reservoir 108.

Although we have found that the automatic transmission shifter of the present invention only consumes approximately 2% of the pedalling energy, it may be desirable to eliminate the consumption of even that 2% under conditions where the transmission is locked in a selected position by the derailleur lock valve 100, whether locked through the use of the pump or through the use of the pressurized reservoir 108. To accomplish this relief, a pump relief/dump valve 120 is provided. In its open position it provides a straight passage and therefore it is of no effect and the circuit operates as described above. However, in its other position, the pump relief/dump valve 102 vents the pump 80 to atmosphere while blocking system pressure loss through its outlet side. By venting only the pump to atmosphere, most pump resistance is removed so that essentially no work is consumed in pumping air through the pump 80.

For those who might not desire the automatic shifting of the transmission but prefer pneumatic actuation to conventional mechanical actuation, the entire pump 80 and pump relief/dump valve 120 of Fig. 6 can be eliminated. The other controls can be used in the manner described above to cause the manual shifting of the derailleurs in response to the pressure from the tank 108.

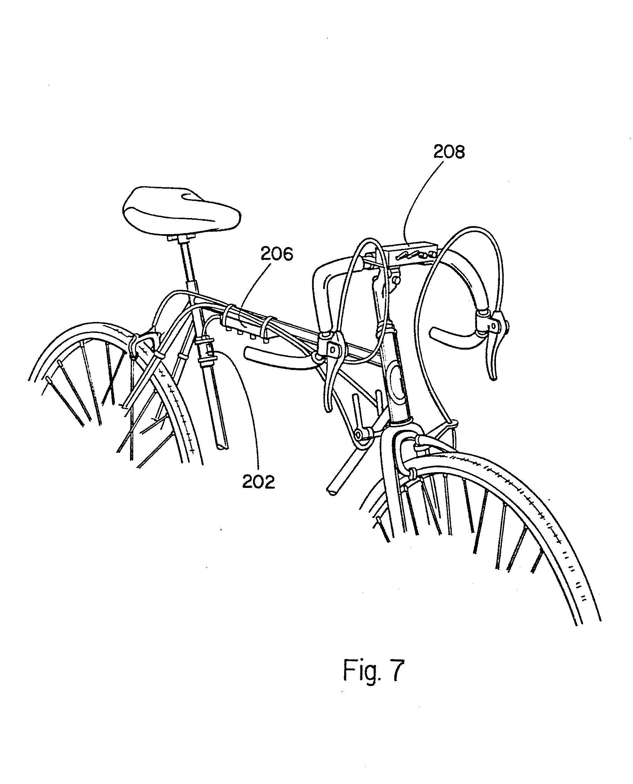

Fig. 7 illustrates an alternative embodiment of the invention in which electrically actuated solenoids are utilized for operating the pneumatic valves for convenience and preference of some riders. As shown in Fig. 7 a battery source of electrical power 202 is mounted on the bicycle frame beneath the seat and electrically connected to a manifold 204 on which are mounted the solenoid valves indicated generally as 206. The solenoid valves are pneumatically connected in the same manner as illustrated in Fig. 6 through appropriate tubing. They are electrically connected through suitable conductors to four switches 208 mounted on the handle bars for ease of access by the rider.

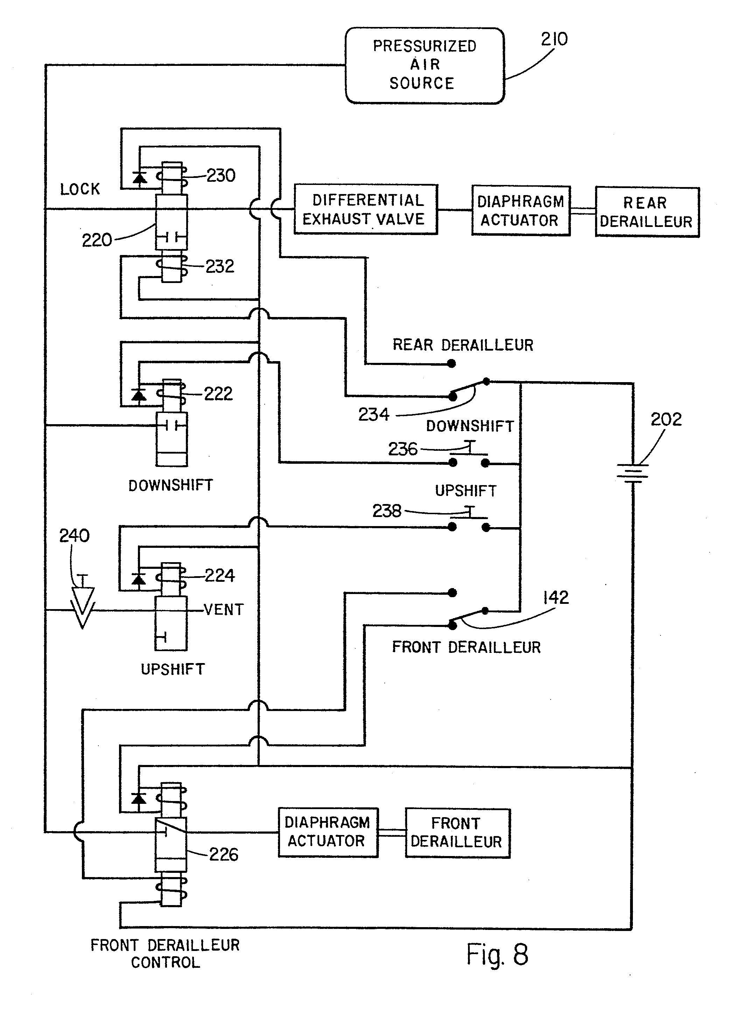

Fig. 8 is a schematic diagram illustrating the circuitry of the alternative embodiment illustrated in Fig. 7. The embodiment has a source of pressurized air 210 which can be a pump or air tank and their accompanying valves as illustrated in Fig. 6. The pneumatic circuit has a derailleur lock valve 220, manual downshift valve 222, manual upshift valve 224 and front derailleur control valve 226. Pneumatically, these valves are identical with the corresponding valves illustrating in Fig. 6. However, each is shown actuated by solenoids which are electrically linked by conductors to a battery 202.

The rear derailleur lock valve 220 is controlled by solenoids 230 and 232 which are connected for alternative energization to a single pole, double throw, rear derailleur control switch 234. In this manner the derailleur lock valve 220 can be positioned in either of its two alternative positions by switching the toggle switch 234.

Similarly, the manual downshift valve 222 is connected to a pushbutton downshift switch 236 so that it may be illustrated in Fig. 8 to its electrically actuated position in which air is dumped from the system to cause a rapid downshift.

The manual upshift valve 224 is actuated by a manual upshift pushbutton 238. Upon depression of the pushbutton 238, the valve 224 is switched from the position to which it is biased as illustrated in Fig. 8 to the position in which it blocks the passage of air from the controlled vent 240.

The front derailleur control valve 226 is also switched to its two positions in the manner that the rear derailleur lock valve is switched by a single pole, double throw front derailleur controlling switch 242. The diodes across the solenoids are for conventional transient protection.

We have found that the embodiments of the invention seem to exhibit a unique inherent detenting characteristic. One might expect the system described above to move the derailleur mechanism exactly, directly proportionally to speed so that intermediate positions between those positions which directly align the chain with the sprocket would be likely to often occur. However, for some unexplained reason this does not occur to a significant extent and the derailleur seems to align the chain with the sprocket rather than maintain such intermediate positions.

It is to be understood that while the detailed drawings and specific examples given describe preferred embodiments of the invention, they are for the purposes of illustration only, that the apparatus of the invention is not limited to the precise details and conditions disclosed and that various changes may be made therein without departing from the spirit of the invention which is defined by the following claims.

-19-

0120571

CLAIMS

1. An improved, pneumatic transmission shifter for a multi-speed vehicle (10) having a pump (26) linked to said vehicle supplying air at a rate which is a function of vehicle speed and/or having other pressurised air supply means (108,210), a pressure responsive motor (40) pneumatically connected to said pump (26) or other pressurised air supply means and mechanically connected (42) to the vehicle transmission shifter (22) input for shifting said transmission (23) in proportion to applied pressure, and a controlled vent (78, 90, 240) interposed between said pump (26) or other pressurised air supply means (108, 210) and said motor (40) for permitting the controlled escape of air, characterised by the feature that the improvement comprises

at least one pneumatic pressure control valve means (74,76,72; 88,92,100,106,120,112; 222,224,226,230,232, 98) connected in communication with said motor for controlling or influencing the pressure applied to said motor (40) upon actuation.

2. An improved, pneumatic transmission shifter for a multi-speed vehicle (10) of the type having a pump (26) linked to said vehicle pumping air at a rate which is a function of vehicle speed, a pressure responsive motor (40) pneumatically connected to said pump (26) and mechanically connected (42) to the vehicle transmission shifter (22) input for shifting said transmission (23) in proportion to applied pressure and a controlled vent (78, 90, 240) interposed between said pump (26) and said motor (40) for permitting the controlled escape of air, characterised by the feature that the improvement comprises

a manually actuable, normally closed, downshift valve (56/74) connected in communication with said motor (40) for relieving the pressure applied to said motor (40) upon actuation

whereby rapid transmission shifting corresponding to the reduced pressure may be manually accomplished.

3.     An improved, pneumatic transmission shifter for a multi-speed vehicle (10) of the type having a pump (26) linked to said vehicle for pumping air at a rate which is a function of vehicle speed, a pressure responsive motor (40) pneumatically connected to said pump (26) and mechanically connected (42) to the vehicle transmission shifter (22) input for shifting said transmission (23) in proportion to applied pressure and a controlled vent (78,90,240) interposed between said pump (26) and said motor (40) for permitting the controlled escape of air, characterised by the feature that the improvement comprises: a manually actuable, normally open, upshift valve (54,76) connected to the outlet end of said controlled vent (78,90,240) for blocking the passage of air out of said controlled vent upon actuation;

        whereby rapid transmission shifting corresponding to increased pressure may be manually accomplished.

4.     An improved, pneumatic transmission shifter for a multi-speed vehicle (10) of the type having a pump (26) linked to said vehicle (10) for pumping air at a rate which is a function of vehicle speed, a pressure responsive motor (40) pneumatically connected to said pump (26) and mechanically connected to the vehicle transmission shifter (22) input for shifting said transmission (23) in proportion to applied pressure and a controlled vent (78,90,240) interposed between said pump (26) and said motor (40) for permitting the controlled escape of air, characterised by the feature that the improvement comprises:

        a differential exhaust valve (72,98) connected between said pump (26) and said motor (40) wherein said exhaust valve (72,98) vents to atmosphere to relieve the pressure applied to said motor (40) whenever the pump pressure falls more than a selected pressure differential below the motor pressure;

        whereby the transmission (23) is automatically shifted in correspondence with the reduced pressure at a rate greater than permitted by escape of air through said controlled vent (78,90,240) during relatively rapid deceleration of said vehicle (10).

5.    An improved, pneumatic transmission shifter for a multi-speed vehicle (10) of the type having a pump (80) linked to said vehicle for pumping air at a rate which is a function of vehicle speed, a pressure responsive motor (96) pneumatically connected to said pump (80) and mechanically connected to the vehicle transmission shifter input for shifting said transmission in proportion to applied pressure and a controlled vent interposed betweeen said pump and said motor for permitting the controlled escape of air, characterised by the feature that the improvement comprises

a transmission locking valve (100) interposed between said pressure responsive motor (96) and said controlled vent (90,240) whereby closing of said valve (100) prevents subsequent changes in pressure applied to said motor (96) to lock said transmission in a position.

6.    An improved, pneumatic transmission shifter for a multi-speed vehicle (10) of the type having a pump (80) linked to said vehicle for pumping air at a rate which is a function of vehicle speed, a pressure responsive motor (96) pneumatically connected to said pump (80) and mechanically connected to the vehicle transmission shifter (94,102) input for shifting said transmission (94,102) in proportion to applied pressure and a controlled vent (90) interposed between said pump (80) and said motor (96) for permitting the controlled escape of air, characterised by the feature that the improvement comprises

(a)    a transmission locking valve (100) interposed between said pressure responsive motor (96) and said controlled vent (90) whereby closing of said valve prevents subsequent changes in pressure applied to said motor (96) to lock said transmission (94,102) in a position;

(b)    a reservoir control valve (112) having its outlet connected between said pump and said motor;

(c)    a pressure reservoir (108) connected to the valve inlet;    and

(d)  coupling means (110) on the pressure reservoir for charging the reservoir with a gas under pressure wherein said reservoir control valve may be opened until the transmission is shifted to a selected position and then said locking valve may be closed to retain that position.

7.    An improved transmission shifter as claimed in claim 6 and further comprising

pump relief/dump valve means (120) connected to the outlet of said pump (96), in one position permitting substantially unobstructed flow to the rest of said shifter and in another position venting only the pump (80).

8.    A transmission shifter as claimed in claim 2 further comprising

a manually actuable, normally open, upshift valve (54,76) connected to the outlet end of said controlled vent (78,90,240) for blocking the passage of air out of said controlled vent upon actuation

whereby rapid transmission shifting corresponding to increased pressure may be manually accomplished.

9.    A transmission shifter as claimed in claim 5, further comprising

a differential exhaust valve (72,98,220) connected between said pump (60, 80) and said motor (70,96) wherein said exhaust valve (72,98) vents to atmosphere to relieve the pressure applied to said motor (70,96) whenever the pump pressure falls more than a selected pressure differential below the motor pressure

whereby the transmission is automatically shifted in correspondence with the reduced pressure at a rate greater than permitted by escape of air through said controlled vent during relatively rapid deceleration of said vehicle.

-23-

10. A transmission shifter as claimed in claim 9 further comprising

A transmission locking valve (100) series connected on one side of said differential exhaust valve (72,98,220) whereby closing of said valve prevents subsequent changes in pressure applied to said motor (70,96) to lock said transmission in a position.

11. A transmission shifter as claimed in claim 10 and further comprising

(a) a transmission locking valve (100,220) interposed between said pressure responsive motor (96) and said controlled vent (90,240) whereby closing of said valve (100,220) prevents subsequent changes in pressure applied to said motor (96) to lock said transmission (94) in a position

(b) a reservoir control valve (112) having its outlet connected between said pump (80) and said motor (96);

(c) a pressure reservoir (108) connected to the valve inlet (112); and

(d) coupling means (110) on the pressure reservoir (108) for charging the reservoir (108) with a gas under pressure wherein said reservoir control valve (112) may be opened until the transmission is shifted to a selected position and then said locking valve (100,220) may be closed to retain that position

(e) pump relief valve means (120) connected to the outlet of said pump (80), in one position permitting substantially unobstructed flow to the rest of said shifter and in another position venting only the pump (80).

12. A transmission shifter as claimed in claim 8 and further comprising:

(a) a second pressure responsive motor (104) connected to the front, pedal derailleur (102);

(b)  a front pedal derailleur control valve (106)
connected to said second motor (104), said control
·valve (106) permitting fluid flow from its inlet to
said motor (104) in one position and in its second
position blocking flow into its inlet and venting
its outlet;  and

(c)  a check valve connected between the input
of said front derailleur control valve (106)
and said pump (80) and polarized to permit flow
toward said second motor (104).

13.      A shifter as claimed in any one of claims 1 to 12
wherein said valves are actuated by electrically controlled
solenoids (222, 224, 230, 232, 226).

Fig. I

Fig. 2

Fig. 3

Fig. 4

Fig. 5

TANK
UPSHIFT

PRESSURE
TANK

112

108

PRESSURIZED
TANK

110

80

PUMP
RELIEF/DUMP VALVE

120

82

PUMP

84

INTAKE

VENT

DERAILLEUR
LOCK

100

98

DIFFERENTIAL
EXHAUST VALVE

96

DIAPHRAGM
ACTUATOR

94

REAR
DERAILLEUR

MANUAL
DOWNSHIFT

88

VENT

MANUAL
UPSHIFT

90

92

VENT

FRONT
DERAILLEUR
CONTROL

106

104

DIAPHRAGM
ACTUATOR

102

FRONT
DERAILLEUR

Fig. 6

Fig. 7

0120571

6 / 6

Fig. 8

European Patent Office

**EUROPEAN SEARCH REPORT**

EP 84 30 0781

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | HYDRAULICS & PNEUMATICS, vol. 35, no. 7, July 1982, page 14, Cleveland, Ohio, US "Air shifts bicycle gears ..... automatically" * Whole article * | 1-3,8 | B 62 M 25/08 |
| | --- | | |
| A | IDEM | 12 | |
| | --- | | |
| A,D | WO-A-8 103 646 (COTTER) * Pages 8-10; figure 4 * | 1-6 | |
| | --- | | |
| A | US-E- 30 758 (LANG) * Figures 1,2,5; column 2, line 51 - column 3, line 17; column 4, lines 22-32, 44-52 * | 1,6,13 | |
| | --- | | |
| A | US-A-4 164 153 (MORITSCH) * Figure 5; column 5, lines 18-63; column 6, line 50 - column 7, line 18 * | 1,5 | TECHNICAL FIELDS SEARCHED (Int. Cl. ³) B 62 M B 62 K |
| | ----- | | |

The present search report has been drawn up for all claims

| Place of search THE HAGUE | Date of completion of the search 24-05-1984 | Examiner DUBOIS B.F.J. |
|---|---|---|